# EUROPEAN PATENT APPLICATION

(11) **EP 1 083 422 A1**
(43) Date of publication of application: **14.03.2001**
(21) Application number: 00307739.3
(22) Date of filing: 07.09.2000
(51) Int. Cl.: G01N 11/16

(54) **Rheometer**

(30) Priority: 08.09.1999 GB 9921101
(71) Applicant: Prescott Instruments Ltd, Tewkesbury, Gloucestershire GL20 8JH (GB)
(72) Inventor: Prescott, Philip Graham, Tewkesbury, Gloucestershire GL20 8JH (GB)
(74) Representative: Makovski, Priscilla Mary

(57) **Abstract**

An apparatus for testing the physical properties of a sample of material (11) comprises at least a first die (2) and a second die (4) which are movable between a closed position in which a test on a sample (11) can be carried out and an open position in which samples (11) can be loaded or removed. A carrier material (6) which can be drawn between the dies (2) and (4) and on which the sample (11) to be tested is provided. A means (8) is provided for intermittently drawing a quantity of carrier material (6) through the dies (2) and (4) when in the open position. The carrier material (6) allows the sample of material (11) to contact the surface of at least one of the dies (2) and (4) through the carrier material.

## Description

This invention relates to providing an improved rheometer which may be loaded automatically.

Previously rheometers have been provided which attempt to allow a user to automatically load samples. However, the devices of the prior art do not achieve this aim as effectively as is desired.

For example EP 0 511 189 discloses an apparatus and method for automating a rheometer in which a film is placed between a sample to be tested and dies of the rheometer. The film in this apparatus provides a complete barrier between the samples and the dies. A disadvantage of this apparatus is that it allows relative movement between the sample and the dies which in turn may lead to inaccurate results.

It is an object of this invention to provide a rheometer which can be loaded with samples automatically and which provides more accurate results than hitherto obtainable.

According to a first aspect of the invention there is provided an apparatus for testing the physical properties of a sample of material, which comprises at least two dies which are moveable between a closed position in which a test on a sample can be carried out, and an open position in which samples can be loaded or removed, carrier material extending between the dies and on which the sample to be tested is placed, and means for intermittently drawing a quantity of carrier material through the space between the dies when the dies are in the open position, the carrier material permitting the sample of material to contact the surface of at least one of the dies through said carrier material, and preferably including releasing means to release the sample from a die to which is has adhered after each test, as the carrier material and sample is drawn from between the dies.

An advantage of allowing the sample to contact at least one of the dies to some degree is that such contact prevents the sample from slipping or rotating with respect to the die which it contacts.

Preferably, the carrier material is provided on a roll which provides a convenient way of arranging the carrier to be easily drawn between the dies.

The carrier may be in the form of a loop which is drawn between the dies and the sample placed in the loop so that the carrier is disposed between both of the dies and the sample. Such a system is advantageous because the presence of the carrier ensures that no sample is left on the dies, and yet the sample is allowed to contact the dies. The loop of carrier material may be drawn between the dies by a pneumatic arm.

There may be provided a covering material in addition to the carrier material. In such an arrangement covering material may be placed between the sample and the second die of the apparatus. The advantage of using a covering material is that it stops the sample sticking to the second die. The covering material may be the same of different to the carrier material, but should be such that slippage between the sample and the second die is also prevented.

The covering material may be provided on a roll.

The two dies of the rheometer are referred to as an upper and a lower die according to their position in the apparatus. Preferably it is the lower die which is oscillated with respect to the upper die. If no covering material is provided the carrier material is preferably arranged between the sample and the lower oscillating die. This is advantageous because the adhesion of the sample to the carrier is greater than the adhesion of the sample to the upper die and therefore when the dies are moved to the open-position the sample remains adhered to the carrier and is pulled away from the upper die.

Preferably any rolls used in the apparatus are adapted to allow the carrier/covering material to be unrolled from the roll as the carrier/covering material is drawn through the apparatus providing a convenient way of arranging a sample of the carrier/covering material.

The carrier/covering material should be inert to the material being tested and unaffected by the temperature at which the test is to be carried out, normally in the range room temperature (23°C) to 250°C.

The carrier/covering material may comprise a continuous sheet of material which contains voids (or other such openings) discrete or being lengthwise of the sheet which allow the sample to contact the die below (and/or above) through the carrier/covering. The voids allow contact to occur between the sample and the die(s).

There should be sufficient carrier/covering material present to enable the sample to be removed from the dies after testing with separating from the carrier/covering.

The carrier/covering material may comprise a woven or knitted fabric formed from textile fibres.

Preferably the carrier/covering material comprises a continuous filament yarn, most preferably a plurality of yarns in a parallel spaced relationship to form a ribbon-like structure. The yarn may be a mono filament or multifilaments twisted in a conventional manner. The yarn may be formed of KEVLAR® which has a high tensile strength and can be used at temperatures up to about 250°C.

Guide means may be provided to ensure that the filaments, in a multifilament filament ribbon are evenly spread between the sample and the die. This ensures that the filaments are correctly aligned.

Pulling means may be provided to draw the carrier/covering material between the dies.

The releasing means of the apparatus may act as the pulling means. More than one pulling means may be provided in the case of where the releasing means acts as the pulling means.

The pulling means may comprise mechanical jaws movable in the direction of travel of the carrier which are adapted to grip the carrier/covering material and pull a predetermined amount between the dies, release the carrier/covering material and return to the start point. Such an arrangement provides the necessary cyclical forces to draw the carrier/covering material through the dies when the dies are in the open position.

The releasing means may lift the carrier and the sample from the lower die before the carrier is drawn through the dies. Such an action by the releasing means ensures that the pulling means and the carrier are not overly strained by trying to remove the sample which may be adhered to the lower die.

In the embodiment where pulling means acts as the removing means the pulling/removing means may push or scrape the sample from one or both dies.

The releasing means may comprise a blade which is adapted, in use, to slide between the carrier and the lower die.

There may be provided loading means to load samples onto the carrier whereby the apparatus functions automatically. Suitable loading means may comprise a robotic arm having a gripping or vacuum head (or other suitable head) to transfer the sample on to the carrier strip. The loading of the sample on to the carrier may be performed manually if required.

The apparatus may be a rheometer which during a test performed on the sample holds one of the dies in a fixed orientation and oscillates the other by a known amount with respect to the fixed die. The apparatus then measures the torque induced through the sample to the fixed die and uses this measurement to calculate various parameters of the sample. In such a system it will be apparent to a person skilled in the art that slippage between the sample and the dies is undesirable and will result in inaccuracies in the measured torque.

According to a second aspect of the invention there is provided a method for testing the physical properties of materials in which a sample of the material to be tested is placed in a test position located between two dies, the dies are closed to mould the material to a test shape, a test is carried out on the sample in the mould, the dies are opened and the sample removed from the test position, wherein a carrier is provided between one of the dies and the sample, the carrier allowing contact between the sample and the die whereby slippage between the sample and the die is prevented during testing.

The method allows accurate testing to be performed on samples of material. By allowing the sample to contact the die to some degree the problem of slippage between the sample and the die which can arise when an impervious carrier is used is ameliorated.

Most preferably the method comprises conveying the sample from the dies using the carrier after the test has been carried out.

The method may further include the steps of conveying a sample to the test position between the dies using the carrier so providing a test procedure which is automated.

Preferably the method comprises providing the carrier between the sample and the oscillating die (which may usually be a lower of the two dies).

The method may comprise providing an additional covering material between the sample and a second of the two dies. Such an arrangement may provide a way of stopping the sample from sticking to the second die such that it cannot be removed in an automated fashion. The covering material may be the same or different from the first material but should prevent slippage between the sample and the upper die.

Alternatively, the method may comprise arranging that the carrier passes between the sample and both dies. This also ensures that the sample is prevented from sticking to either die.

A roll of carrier may be provided which in an automatic system is gradually unwound as it is used to convey the sample between the dies for testing and also it removes the sample from between the dies after testing.

The covering material may also be provided on a roll.

The carrier and sample may be lifted slightly before the carrier is drawn from between the dies after the testing. If the carrier were merely pulled through the dies after a test then because the sample is in contact with the lower die there would be a high strain on the carrier. By lifting the sample and carrier slightly before the carrier is pulled through the dies the strain on the carrier is reduced.

Alternatively, the sample may be pushed from the dies. This also provides a method for ensuring that the carrier is not overly strained.

The carrier may be pulled through the dies by a pulling means comprising a pair of jaws. Alternatively, or additionally the pulling means may comprise a single member, and jaws may be provided which pull the carrier from the roll but which do not pull the carrier between the dies.

The action of the pulling means may unroll the roll of carrier material and may also unroll the roll of covering material.

Embodiments of the invention will now be described, by way of example only, with reference to the accompanying drawings of which:
**Figure 1** is a schematic side elevation of a test apparatus according to the invention;
**Figure 2** is a schematic side elevation of a second embodiment according to the invention;
**Figure 3** is a schematic side elevation of a third embodiment of the invention; and
**Figure 4** is a schematic side elevation of the third embodiment of the invention during testing of a sample.

The Figures show an oscillating die rheometer with a quantity of carrier material provided on a roll.

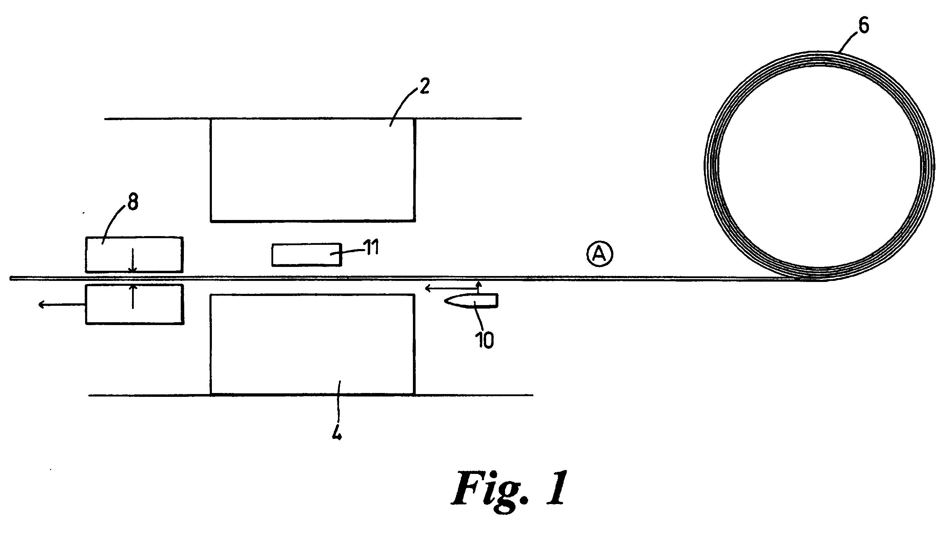

Figure 1 shows an upper die 2 and a lower die 4 of an oscillating die rheometer used for measurement of the visoelastic properties of material samples. To the right of the Figure is shown a roll of carrier material 6. In this embodiment the carrier comprises a plurality of continuous filaments of KEVLAR® in a parallel relationship. The filaments of the carrier are arranged so that they pass between the dies of the rheometer in proximity to the lower die 2 (a large gap is shown in the Figure for reasons of clarity). A means (not shown) is provided to ensure that the fibres are evenly arranged between the sample and the lower die 2.

At the other side of the dies 2,4 to the roller of carrier material 6 is provided a pulling means 8. The pulling means comprises two jaws, arranged so that the carrier passes between them and which can be bought together to grip the carrier. The jaws can also be moved at 90° to the motion required to grip the carrier, that is in a direction required to draw the carrier between the dies.

Between the roll 6 and the dies 2,4 there is provided a lifting means comprising a wedge shaped blade 10. The blade 10 can be moved in two directions: the first in a plane perpendicular to the carrier; the second in a plane parallel to the plane of the carrier.

In use, a sample 11 of material to be tested is placed on the carrier at position A. This placing of the sample 11 may be achieved by an automatic means which is not shown in the Figures or may be achieved manually.

One the sample 11 has been placed on the carrier the pulling means 8 is closed so that the jaws grip the carrier passing between them. The pulling means is then moved in a direction away from the dies 2,4 so that the carrier is pulled between the dies 2,4. This motion of the carrier moves the sample 11 to be tested between the two dies 2,4, as shown in the Figures.

The upper die 2 is then lowered so that it comes into contact with the material under test and the test is performed. Once the test is completed the upper die 2 is raised leaving the sample 11 in contact with the carrier and the lower die 4.

The sample 11 of material is removed from the lower die 4. This is achieved by moving the wedge shaped blade 10 (in the direction of the arrows) and subsequently by drawing the carrier through the dies 2, 4 by gripping the carrier with the pulling means 8.

Specifically the wedge shaped blade 10 is moved toward the dies 2, 4 and also in an upwards direction. This action has the effect of lifting the carrier together with the sample 11 of material away from the lower die 4 so that the carrier can be drawn through the dies 2,4.

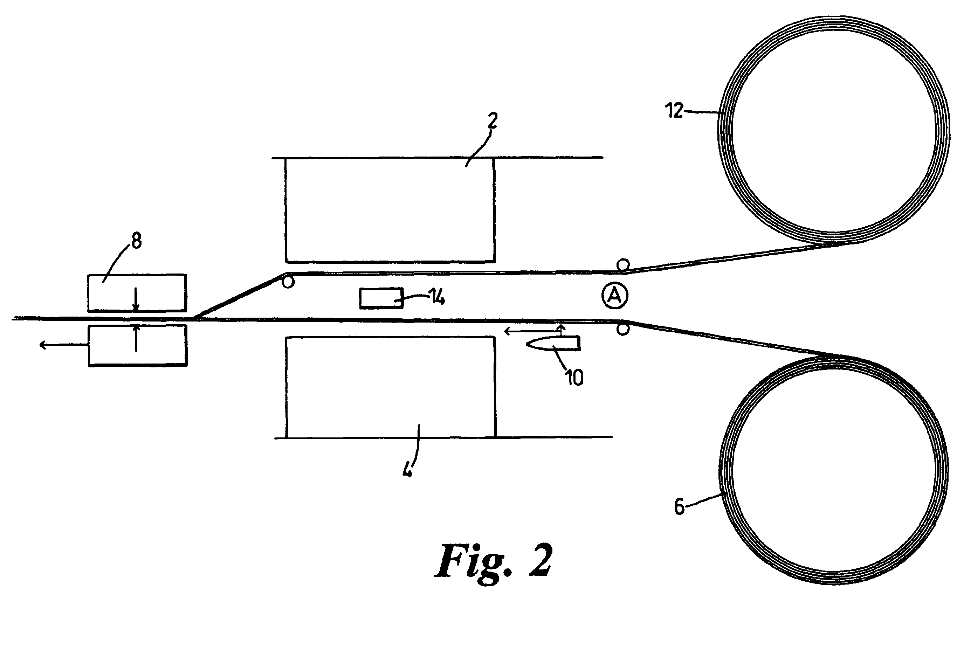

Figure 2 shows a second embodiment of the invention and parts which are the same as in Figure 1 have been noted with similar reference numerals.

In the second embodiment a roll 12 of covering material is provided. The sample is loaded in a similar manner as described in relation to Figure 1 (by being placed at A and drawn into the space between the two dies). In this embodiment once the sample 14 is between the dies a sheet of either carrier or covering is between it and each of the dies 2, 4. The covering material on the second roll 12 is the same material as used on the first roll 6.

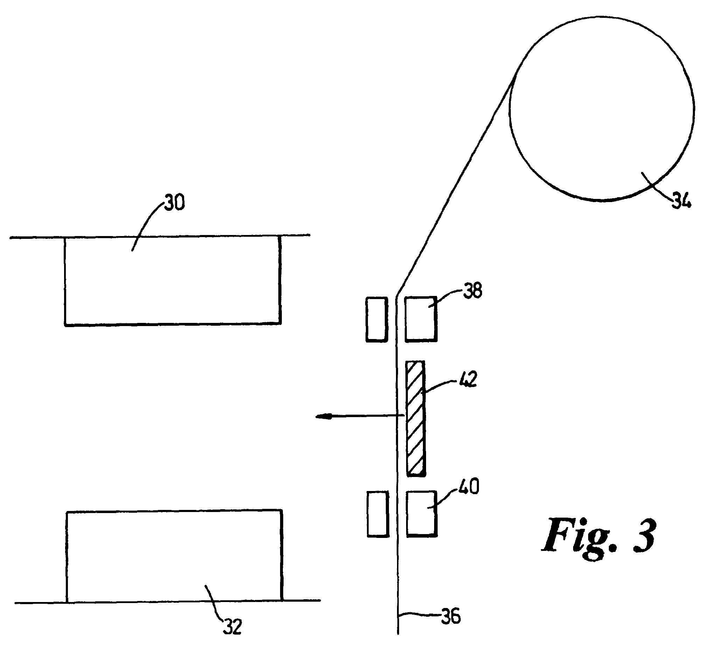

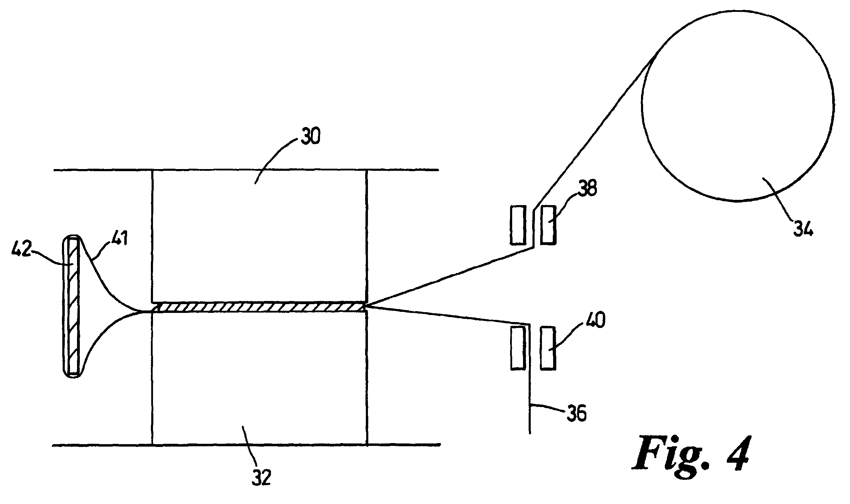

A third embodiment of the invention is shown in Figures 3 and 4. In these Figures like elements are referred to by the same reference numerals.

Upper 30 and lower 32 dies of the rheometer are provided as with the first and second embodiments. In Figure 3 the dies 30,32 are shown in an open position and in Figure 4 in a closed position. A roll of carrier 34 provides a continuous strip of carrier 36. As with the first two embodiments the carrier 36 comprises a plurality of continuous filaments of KEVLAR®.

The strip of carrier 36 passes between two sets of jaws 38,40, in between which an element 42 (releasing means) is positioned in its rest position (in Figure 3). It is important to note that the strip of carrier 36 is positioned between the solid element 42 and dies 30,32.

In use, jaws 40 is activated and grips the carrier 36. Movement of the element 42, which is for example a pneumatic arm, draws carrier 36 from the roll 34. The element 42 activates, moving between the two dies 30,32. This movement pulls a loop 41 of the carrier 36 between the dies 30,32. The sample to be tested (which is not shown in the Figures) is then placed in this loop over die 32 and the dies 30,32 moved to the closed position.

Portions of the carrier are thereby positioned between both the upper die 30 and the sample and the lower die 32 and the sample, encapsulating the sample but allowing contact with the dies 30,32 to ensure that the sample does not slip with respect to the dies.

After completion of the test the dies 30,32 are moved back to their open-position (as shown in Figure 3). Clamp 40 is opened and clamp 38 is closed. The closing of clamp 38 ensures that no clean carrier 36 is pulled from the roll 34.

Next the solid element 42 is moved back through the dies 30,32, towards the clamps 38,40 to its original rest position. This motion not only releases the loop of carrier 36 held between the dies but ensures that the sample is pushed from the dies 30,32. If the sample is slightly adhered to the dies 30,32, the sample is cleanly removed, by this action and the carrier is not overstressed.

Once the solid element 42 has been returned to its rest position (or during the movement of the solid element 42) the clamp 40 is moved in a direction to pull the carrier 36 and remove any slack. After the slack has been taken up the clamp 40 is opened and returns to its rest position (as shown in Figure 3). The clamp 40 then closes again and the clamp 38 opens. In this orientation the rheometer is returned to its starting position ready for the next test.

## Claims

1. An apparatus for testing the physical properties of a sample of material, the apparatus comprises at least a first and a second die which are moveable between a closed position in which a test on a sample can be carried out, and an open position in which samples can be loaded or removed, carrier material for drawing between the dies and on which the sample to be tested is placed, and means for intermittently drawing a quantity of carrier material through the space between the dies when the dies are in the open position, the carrier material permitting the sample of material to contact the surface of at least the first die through said carrier material.

2. An apparatus according to Claim 1 which further includes releasing means to release the sample from a die to which it has adhered after each test.

3. An apparatus according to Claim 1 or 2 wherein the carrier is in the form of a loop which is drawn between the dies and the sample is placed in the loop so that the carrier is disposed between each of the dies and the sample.

4. An apparatus according to any preceding claim wherein the carrier material comprises a continuous sheet of material which contains openings, discrete or lengthwise of the sheet, which allow the sample to contact at least the first die through the carrier.

5. An apparatus according to any preceding claim wherein there is provided a covering material in addition to the carrier material.

6. An apparatus according to Claim 5 wherein the covering material is placed between the sample and at least the second die of the apparatus.

7. An apparatus according to any preceding claim wherein pulling means are provided to draw the carrier material between the dies.

8. An apparatus according to any one of Claims 5 or 6 wherein pulling means are provided to draw the covering material between the dies.

9. An apparatus according to Claim 7 or 8 wherein the releasing means of the apparatus acts as the pulling means.

10. An apparatus according to any one of Claims 7 or 8 wherein the pulling means comprises mechanical jaws moveable in the direction of travel of the material which are adapted to grip the material and pull a predetermined amount between the dies, release the material and return to the start point.

11. An apparatus according to any preceding claim wherein the apparatus is a rheometer which during a test performed on the sample holds one of the dies in a fixed orientation and oscillates the other by a known amount with respect to the fixed die.

13. An apparatus according to Claim 11 wherein it is a lower die which is oscillated with respect to an upper die.

14. An apparatus according to Claim 12 wherein if no covering material is provided the carrier material is arranged between the sample and the lower oscillating die.

15. A method for testing the physical properties of materials in which a sample of the material to be tested is placed in a test position located between at least a first and a second die, the dies are closed to mould the material to a test shape, a test is carried out on the sample in the mould, the dies are opened and the sample is removed from the test position, wherein a carrier material is provided between at least the first die and the sample, the carrier material allowing contact between the sample and the die whereby slippage between the sample and the die is prevented during testing.
